Europäisches Patentamt

European Patent Office

Office européen des brevets

(11) Publication number: **0 422 291 A1**

## EUROPEAN PATENT APPLICATION

(21) Application number: **89310345.7**

(22) Date of filing: **10.10.89**

(51) Int. Cl.⁵: **B62J 6/00**

(43) Date of publication of application:
**17.04.91 Bulletin 91/16**

(84) Designated Contracting States:
**BE ES FR IT**

(71) Applicant: **Percy, Alan Michael**
**47 Palm Avenue**
**Sidcup Kent DA14 5JF(GB)**

(72) Inventor: **Percy, Alan Michael**
**47 Palm Avenue**
**Sidcup Kent DA14 5JF(GB)**

(74) Representative: **Matthews, Graham Farrah**
**BROOKES & MARTIN Incorporating**
**MATTHEWS, HADDAN & CO. High Holborn**
**House 52/54, High Holborn**
**London, WC1V 6SE(GB)**

(54) **Identification plug.**

㊲ A handlebar fitting comprises a container (14) and cap combination, said cap and container (14) being connected together to form an enclosed receptacle and being readily disconnectible by the user. Wherein said cap is in the form of a cylindrical plug having a tapered surface or one or more projections (15) extending longitudinally along or circumferentially of the outer surface of the plug, which surface or projections serve to effect an interference fit within the end of a handlebar and to support the container (14) securely within the handlebar.

FIG.1

## IDENTIFICATION PLUG

This invention relates to a container especially for application to the handlebars of a cycle particularly but not solely for the purpose of containing identification data of the owner. In an adaptation the container may also embody a light.

According to the invention there is provided a handlebar fitting comprising a container and cap combination, said cap and container being connected together to form an enclosed receptacle and being readily disconnectible by the user, wherein said cap is in the form of a cylindrical plug having a tapered surface or one or more projections extending longitudinally along or circumferentially of the outer surface of the plug, which surface or projections serve to effect an interference fit within the end of a handlebar and to support the container securely within the handlebar.

The container may be used to receive a personal identification sheet which bears the name, address, telephone number, blood group and other data belonging to the owner.

Advantageously, the cap may be provided with a flange which may have a diameter equal to the outside diameter of the handlebar tubing whereby the device simultaneously serves as a plug which covers the otherwise sharp edges of the handlebar end and thus prevents injury to the rider in the event of an accident.

In an adaptation of the invention, a torch bulb and battery holder may be provided to fit into said container to illuminate the cap, in which case the cap is made of transparent or translucent material. Thus this adaptation may provide a safety light to mark the end of the handlebar.

The invention will now be described by way of example with reference to the accompanying drawing in which:-

FIGURE 1 shows an exploded elevation of the cap and container;

FIGURE 2 shows the cap and container secured together and firmly supported within the end of a handlebar;

FIGURE 3 shows a modification of the cap of Figure 1; and

FIGURE 4 shows a light fitting for use with the cap of Figure 3.

The cap 10 is moulded from a plastics material and comprises a cylindrical body 11 having a domed flange at one end of a diameter matching the external diameter standard size handlebar tubing. The body 11 is provided at the other end with an internally threaded portion 12 which receives the threaded portion 13 of a cylindrical container 14.

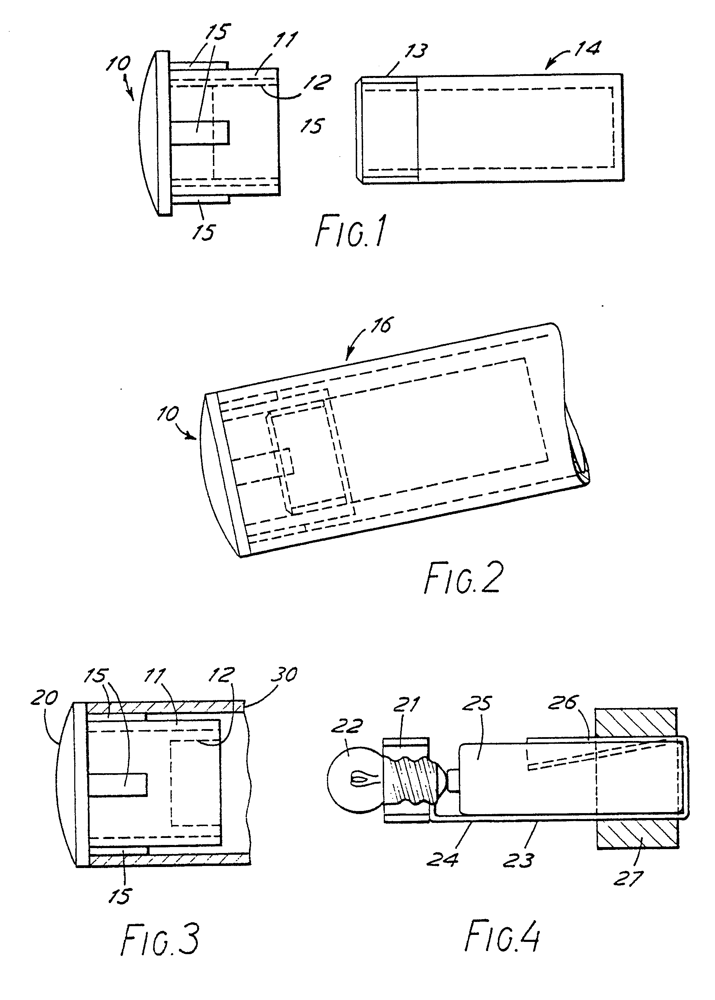

Extending longitudinally over about half the length of the exterior surface of the body 11 are four elongate projections 15 which serve to effect an interference fit when the cap 10 is pressed with a force fit into the handlebar end 16 (see Figure 2). The projections may be rectangular or semicircular in cross-section.

The container 14 may also be moulded in plastics material or may be a metal extension.

The threadings serving to connect the cap to the container may alternatively be provided the reverse way round i.e. the cap may have an external thread engaging an external thread on the container.

The cap and container may be attached together by a snap action arrangement, of known design per se , provided thereon. A bayonet connection, of known design per se , is also a suitable means for securing the two parts together in a readily disconnectible manner.

Instead of elongate projections 15 the exterior surface of the body 11 may have a series of annular ribs providing a saw-tooth profile in longitudinal section.

Figure 3 shows a modified form of the cap 10 of Figure 1 which may be used with a torch light fitting which is shown schematically in Figure 4.

The cap 20 of Figure 3 is generally the same as that of Figure 1 and parts having the same or similar function are given the same reference numbers. The cap 20 is shown inserted in the open end 30 of a handlebar tube. The cap 20 is formed from a transparent or translucent material, preferably a synthetic plastics material, and the screw-threaded portion 12 is arranged to receive a screw-threaded collar 21 of the torch light fitting of Figure 4.

The torch light fitting of Figure 4 comprises the collar 21 mentioned above which is electrically insulating material and is adapted to receive a torch bulb as indicated at 22. The collar is attached to a metal housing 23 formed of metal, the housing having an ear 24 adapted to contact the side of the bulb 22. The housing 23 is arranged to hold a battery cell 25, preferably of the AA size, with the positive terminal in contact with the centre end contact of the bulb 22, and with the end of the housing in contact with the negative terminal of the cell so as to illuminate the bulb. The housing 23 may have a resilient arm 26 arranged to grip the cell 25 in the housing. Means (not shown) is provided to turn the light bulb on and off in known manner per se . The housing 23 is also provided with a foam plastics material collar 27 to retain in the handlebar tube out of contact therewith.

Thus when the torch light fitting is secured into the cap and the assembly inserted into the tube end of the handlebar, the cap 20 is illuminated and provides a safety light marking the end of the handlebar in the dark.

The invention on the one hand enables the user's personal data to be safely stowed on the machine so that in the event of an accident the necessary information can be quickly accessed by the police; and on the other hand may provide a safety light to mark the ends of the handle bars of the machine. The device may be provided in various outside diameter sizes for application to racing cycles down to toddlers' tricycles.

The container may also house small items such as spare valves, batteries or other cycle parts.

## Claims

1. A handlebar fitting comprising a container and cap combination, said cap and container being connected together to form an enclosed receptacle and being readily disconnectible by the user, wherein said cap is in the form of a cylindrical plug having a tapered surface or one or more projections extending longitudinally along or circumferentially of the outer surface of the plug, which surface or projections serve to effect an interference fit within the end of a handlebar and to support the container securely within the handlebar.

2. A handlebar fitting as claimed in claim 1, in which said cap is provided with a flange having a diameter substantially equal to the outside diameter of the handlebar tube and arranged to abut the end fall of the tube when the cap is in place within the end of the tube.

3. A handlebar fitting as claimed in claim 1 or 2, in which said container is replaced by an electric torch light device and said cap is formed of transparent or translucent material.

4. A handlebar fitting as claimed in claim 1, 2 or 3, in which said torch light fitting comprises a collar adapted to be connected to said cap in the same manner as said container and adapted to hold a torch bulb, and a housing adapted to hold a battery cell in contact with the bulb to illuminate it.

5. A handlebar fitting substantially as herein described with reference to the accompanying drawings.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-2469944 (BAUTERS) <br> * the whole document * | 1-4 | B62J6/00 |
| A | US-A-2793284 (SIMONEIT) <br> * figures 1, 2 * | 1 | |

TECHNICAL FIELDS
SEARCHED (Int. Cl.5 )

B62J

The present search report has been drawn up for all claims

| Place of search | Date of completion of the search | Examiner |
|---|---|---|
| THE HAGUE | 07 JUNE 1990 | ONILLON C.G.A. |

EPO FORM 1503 03.82 (P0401)